# EUROPEAN PATENT APPLICATION

(11) **EP 4 708 512 A1**
(43) Date of publication of application: **11.03.2026**
(21) Application number: 25805303.2
(22) Date of filing: 20.02.2025
(51) Int. Cl.: H01M 50/244, H01M 50/258, H01M 10/613

(54) **BATTERY CASE AND MULTI-LAYER BATTERY SYSTEM**

(30) Priority: 27.12.2024 CN 202423267286 U
(71) Applicant: Eve Energy Co., Ltd., Huizhou, Guangdong 516006 (CN)
(72) Inventor: WEN, Shengde, Huizhou, Guangdong 516006 (CN)
(74) Representative: HGF
(86) International application number: PCT/CN2025/078178
(87) International publication number: WO 2025/251685

(57) **Abstract**

Provided are a battery box and a multilayer battery system. The multilayer battery system includes a battery box, a conductive assembly, and multiple cell assemblies (20). The battery box includes a bottom guard plate (11), a box cover (13), and a box body connected to the bottom guard plate (11) and the box cover (13). The box body includes at least two splicing boxes (12) that are stacked. For each splicing box (12), the upper end and the lower end of the splicing box (12) are each provided with an opening. The cell assemblies (20) are stacked. Each splicing box (12) accommodates a cell assembly (20). The conductive assembly is disposed in the battery box and configured to be electrically connected to the cell assemblies (20).

## Description

The invention claims priority to Chinese Patent Application No. 202423267286.8 filed with the China National Intellectual Property Administration on Dec. 27, 2024, the disclosure of which is incorporated herein by reference in its entirety.

### TECHNICAL FIELD

The invention relates to the field of power battery technologies, specifically relates to a battery box and a multilayer battery system.

### BACKGROUND

With the development of power batteries, the scope of application of power batteries has become increasingly widespread. A battery pack is provided with only a single layer of cells. When an increase in battery capacity is required for logistics vehicles, buses, or certain energy storage projects, battery capacity can be increased only when multiple battery packs are stacked and connected in series and parallel by an external copper busbar.

### TECHNICAL PROBLEM

This method of increasing battery capacity by stacking battery packs requires additional frames and connecting structures, leading to inconvenient assembly, low efficiency, high costs, a low volume utilization rate, and large space occupation.

### TECHNICAL SOLUTION

According to a first aspect, embodiments of the invention provide a battery box.

The battery box includes a bottom guard plate, a box cover, and a box body connected to the bottom guard plate and the box cover. The box body includes at least two splicing boxes that are stacked. For each splicing box, the upper end and the lower end of the splicing box are each provided with an opening.

According to a second aspect, embodiments of the invention provide a multilayer battery system including the preceding battery box, multiple cell assemblies, and a conductive assembly.

The multiple cell assemblies are stacked. Each splicing box accommodates one of the multiple cell assemblies.

The conductive assembly is disposed in the battery box and configured to be electrically connected to the multiple cell assemblies.

### BENEFICIAL EFFECTS

In the battery box of the invention, the upper end and the lower end of each splicing box are each provided with an opening, and the box body is formed by at least two splicing boxes. Compared with the related art in which multiple battery packs are stacked, the battery box of the invention eliminates the need for a bottom plate and a top plate for each battery pack, thereby reducing the overall height of the battery box and the materials used for the battery box without changing the number of cell assemblies. This not only improves the volume utilization but also reduces costs.

The splicing boxes form the box body, allowing the number of cell assemblies to be selected according to the actual required battery capacity and allowing the number of splicing boxes to be selected according to the number of cell assemblies. This enables more flexible adjustment of the total battery capacity of the multilayer battery system, eliminates the need to customize battery boxes of different specifications, and provides better compatibility.

The multilayer battery system of the invention includes the preceding battery box, thereby offering high volume utilization and reducing costs.

### BRIEF DESCRIPTION OF THE DRAWINGS

FIG. 1 is a first view illustrating the structure of a multilayer battery system according to the invention.
FIG. 2 is a view illustrating the structure of part of a splicing box according to the invention.
FIG. 3 is a first view illustrating the structure of a splicing box according to the invention.
FIG. 4 is a second view illustrating the structure of a multilayer battery system according to the invention.
FIG. 5 is a section view of a multilayer battery system according to the invention.
FIG. 6 is a second view illustrating the structure of a splicing box according to the invention.
FIG. 7 is a view illustrating the structure of a multilayer battery system without a side cover and a box cover according to the invention.
FIG. 8 is a view illustrating the distribution of a first sealant layer, a second sealant layer, and a third sealant layer according to the invention.

### Reference list

11. bottom guard plate; 12. splicing box; 12a. accommodation body; 12b. connecting plate; 121. first side plate; 122. second side plate; 123. partition plate; 124. frame; 1241. second sealant retaining groove; 125. first sealant retaining groove; 13. box cover; 14. electrical box; 141. shielding plate; 142. annular side wall; 15. side cover; 16. second accommodation cavity; 17. first accommodation cavity; 171. first sealant layer; 172. second sealant layer; 173. third sealant layer; 20. cell assembly; 30. liquid cooling assembly; 31. first liquid cooling plate; 32. second liquid cooling plate

### DETAILED DESCRIPTION

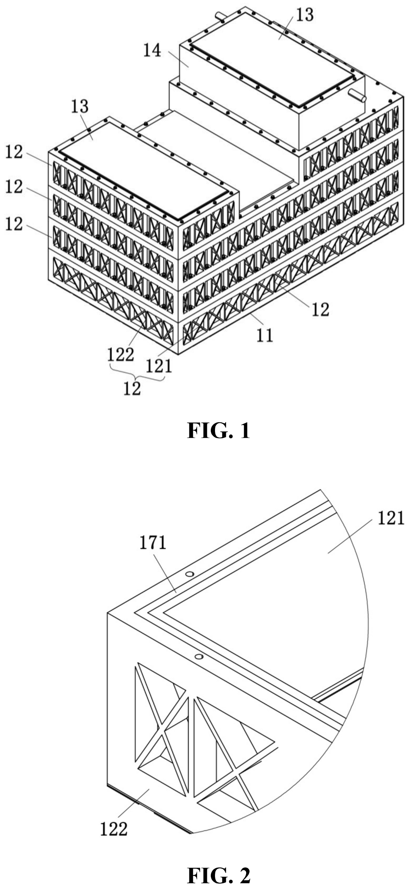

An embodiment provides a multilayer battery system with a large battery capacity, thereby satisfying the power consumption requirements. As shown in FIG. 1, the multilayer battery system includes a battery box, multiple cell assemblies 20 disposed in the battery box, and a conductive assembly disposed in the battery box. The cell assemblies 20 are stacked in the vertical direction. The conductive assembly is configured to be electrically connected to the cell assemblies 20 so that the cell assemblies 20 are connected in series, thereby increasing the battery capacity.

In the related art, to ensure a large battery capacity, generally multiple battery packs are stacked and connected by an external copper busbar. This not only requires additional frames and connecting structures for securing the battery packs, resulting in inconvenient assembly and high costs, but also leads to low volume utilization and large space occupation.

In this embodiment, the battery box includes a bottom guard plate 11, a box body, and a box cover 13 in sequence from bottom to top. The upper end and the lower end of the box body are open. The bottom guard plate 11 is connected to the bottom end of the box body and is configured to cover the opening at the bottom end of the box body. The box cover 13 is connected to the top end of the box body and is configured to cover the opening at the top end of the box body. The box body includes at least two splicing boxes 12 that are stacked. Each splicing box 12 has openings at both its upper end and lower end. Each splicing box 12 accommodates a cell assembly 20. Compared with the related art in which multiple battery packs are stacked, the battery box of the invention eliminates the need for a bottom plate and a top plate for each battery pack 12, thereby reducing the overall height of the battery box and the materials used for the battery box without changing the number of cell assemblies 20. This not only improves the volume utilization but also reduces costs.

The splicing boxes 12 form the box body, allowing the number of cell assemblies 20 to be selected according to the actual required battery capacity and allowing the number of splicing boxes 12 to be selected according to the number of cell assemblies 20. This enables more flexible adjustment of the total battery capacity of the multilayer battery system, eliminates the need to customize battery boxes of different specifications, and provides better compatibility.

In some embodiments, the cell assemblies 20 are stacked in the box body without being assembled into groups beforehand, thereby enhancing the volume utilization of the battery box.

Compared with the related art in which stacked battery packs are connected by an external busbar, in this embodiment, the conductive assembly is disposed in the battery box, is not exposed, and does not require an additional protective structure, thereby reducing costs and enhancing the reliability of the multilayer battery system.

In some embodiments, as shown in FIG. 2, a first sealant layer 171 is disposed between the box cover 13 and the splicing box 12 connected to the box cover 13, between two adjacent splicing boxes 12, and between the bottom guard plate 11 and the splicing box 12 connected to the bottom guard plate 11. The first sealant layer 171 not only fixes the box cover 13 to the splicing box 12 connected to the box cover 13, fixes two adjacent splicing boxes 12, and fixes the bottom guard plate 11 to the splicing box 12 adjacent to the bottom guard plate 11, but also provides a sealing function. This enables a simple structure, good sealing performance, and improved reliability of the multilayer battery system.

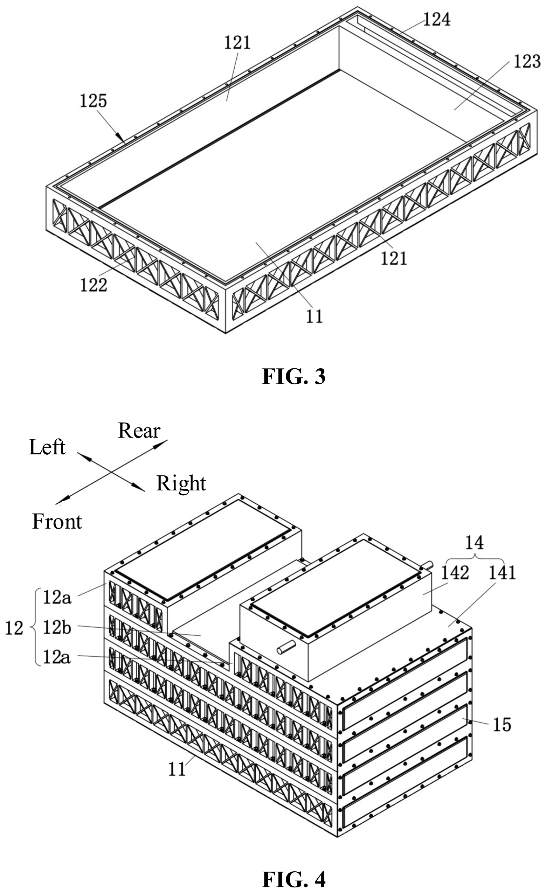

To make the structure of the battery box more compact, as shown in FIG. 3, in some embodiments, the top end face of a splicing box 12 is provided with a first sealant retaining groove 125. A sealant is injected into the first sealant retaining groove 125 to form the first sealant layer 171 to connect the box cover 13 to the splicing box 12 adjacent to the box cover 13.

To form a sealant layer between the bottom guard plate 11 and the splicing box 12 adjacent to the bottom guard plate 11, the bottom end face of the splicing box 12 adjacent to the bottom guard plate 11 is also provided with a first sealant retaining groove 125 to facilitate sealant injection.

The first sealant retaining groove 125 is disposed along the periphery of the opening of the splicing box 12, forming an annular groove. A sealant is injected into the first sealant retaining groove 125 to form the first sealant layer 171 as an annular structure, creating a seal around the periphery of the opening and thereby improving the sealing effect.

In some other embodiments, the top end face and the bottom end face of the uppermost splicing box 12 that cooperates with the box cover 13 are each provided with a first sealant retaining groove 125, while the remaining splicing boxes 12 may each have a first sealant retaining groove 125 disposed on only the bottom end face, thereby achieving sealing between adjacent structures.

In some other embodiments, the top end face and the bottom end face of each splicing box 12 are each provided with a first sealant retaining groove 125 so that each splicing box 12 can be placed in any layer, thereby improving versatility.

To better adapt the multilayer battery system to the mounting space in the corresponding device, in some embodiments, the uppermost splicing box 12 is a top splicing box. The top splicing box includes at least two accommodation bodies 12a and a connecting plate 12b. The at least two accommodation bodies 12a are spaced apart. Each accommodation body 12a is hollow to accommodate a cell assembly 20. The connecting plate 12b connects the bottom ends of two adjacent accommodation bodies 12a, thereby forming a clearance space between the two adjacent accommodation bodies 12a and the connecting plate 12b. The clearance space can both avoid interference with other structures in the mounting space and reduce the size of the corresponding cell assemblies 20 in the top splicing box, thereby allowing more flexible adjustment of the total battery capacity of the multilayer battery system.

By way of example, as shown in FIG. 4, the top splicing box includes two accommodation bodies 12a and a connecting plate 12b. The two accommodation bodies 12a are spaced apart from each other and are connected by the connecting plate 12b. Each accommodation body 12a defines a cavity configured to accommodate a cell assembly 20. The two cavities may accommodate the same or different numbers of cell assemblies 20.

For each accommodation body 12a, a first sealant retaining groove 125 is disposed on the top end face of the accommodation body 12a to accommodate a first sealant layer 171, thereby sealing the top of the accommodation body 12a.

In some embodiments, with reference to FIG. 1 and FIG. 4, the box body also includes an electrical box 14. The electrical box 14 is disposed between the box cover 13 and the top splicing box 12. Both the top end and the bottom end of the electrical box 14 are open. The electrical box 14 is in communication with the splicing box 12 adjacent to and below the electrical box 14. The top opening of the electrical box 14 is covered by the box cover 13. The electrical box 14 can accommodate electrical components such as a battery disconnection unit (BDU) and a battery management system (BMS), thereby separating these electrical components from the cell assembly 20 and ensuring operational safety.

In some embodiments, as shown in FIG. 4, the electrical box 14 includes a shielding plate 141 and an annular side wall 142 disposed on the shielding plate 141. A through hole is formed in the shielding plate 141. The annular side wall 142 is arranged circumferentially around the through hole, defining a space inside for accommodating the electrical components. The shielding plate 141 is configured to cover the top opening of the accommodation body 12a.

To achieve sealing between the electrical box 14 and the box cover 13, a third sealant layer 173 is disposed between the top end face of the electrical box 14 and the box cover 13.

In some embodiments, the top end face of the electrical box 14 is provided with a third sealant retaining groove. A sealant is injected into the third sealant retaining groove to form the third sealant layer 173.

It is to be understood that the bottom of the electrical box 14 is sealed to the accommodation body 12a by the first sealant layer 171.

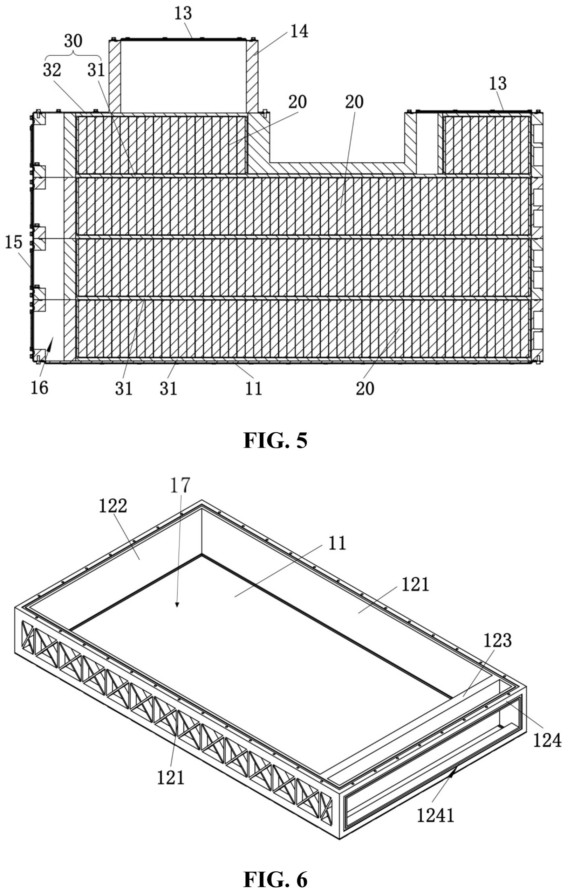

In some embodiments, the multilayer battery system also includes a liquid cooling assembly 30 configured to dissipate heat from the cell assembly 20. As shown in FIG. 5, the liquid cooling assembly 30 includes multiple first liquid cooling plates 31. A bottom of each cell assembly 20 is provided with a first liquid cooling plate 31. The temperature of the cell assembly 20 is controlled by the coolant inside the first liquid cooling plate 31, thereby preventing thermal runaway caused by excessive temperature during operation of the cell assembly 20.

In some embodiments, the first liquid cooling plate 31 may be welded to the inner bottom end of the splicing box 12 to ensure the positional stability of the first liquid cooling plate 31. Moreover, multiple first liquid cooling plates 31 are provided, thereby increasing the strength of the battery box and enhancing the reliability of the multilayer battery system.

In some embodiments, the liquid cooling assembly 30 also includes a second liquid cooling plate 32. The second liquid cooling plate 32 is stacked on the top of the uppermost cell assembly 20. The second liquid cooling plate 32 is configured not only to dissipate heat from the uppermost cell assembly 20, but also to dissipate heat from the electrical components in the electrical box 14 above the second liquid cooling plate 32, thereby controlling the temperature of the electrical components and preventing thermal runaway.

The liquid cooling assembly 30 and the liquid cooling plates are known in the art, and thus the structures of the liquid cooling assembly 30 and the liquid cooling plates are not described here.

To improve the stability of the battery box, in some embodiments, the bottom guard plate 11 is bolted to the box body, two adjacent splicing boxes 12 are bolted together, and the box cover 13 is bolted to the box body. In some embodiments, bolts used in the connection may have a specification of M5-M8 and a shank length of 15 mm to 50 mm.

To ensure operational safety, the battery box includes first accommodation cavities 17 and second accommodation cavities 16. The cell assembly 20 is located in the first accommodation cavity 17. The conductive assembly includes a conductive busbar and a connector structure. The conductive busbar is laid on the top surface of the cell assembly 20 and is electrically connected to the cell assembly 20. The connector structure is located in the second accommodation cavity 16 and is configured to be in series connection with the conductive busbar. The liquid cooling assembly 30 also includes a pipe joint connected to the first liquid cooling plate 31 and the second liquid-cooling plate 32. The pipe joint is disposed in the second accommodation cavity 16. The first accommodation cavity 17 and the second accommodation cavity 16 allow the connector structure and the pipe joint to be separated from the cell assembly 20, thereby enhancing the reliability of the multilayer battery system.

As shown in FIG. 4, in some embodiments, the battery box also includes side covers 15. Each side cover 15 is vertically arranged and detachably connected to the box body. Each side cover 15 and the box body enclose a second accommodation cavity 16. With the side covers 15, it is easy to open the second accommodation cavities 16 to maintain the structure inside the second accommodation cavities 16.

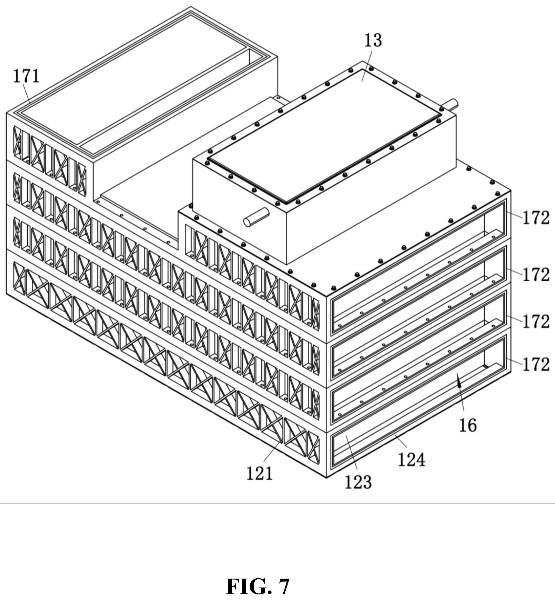

In some embodiments, as shown in FIG. 6 and FIG. 7, the splicing box 12 includes a first side plate 121, a second side plate 122, a frame 124, and a partition plate 123. Two first side plates 121 are provided. The two first side plates 121 are spaced apart. The second side plate 122, the partition plate 123, and the frame 124 are all disposed between the two first side plates 121. The second side plate 122 is connected to one end of each of the two first side plates 121. The frame 124 is connected to the other end of each of the two first side plates 121. The partition plate 123 is located between the second side plate 122 and the frame 124 and is connected to the two first side plates 121. The two first side plates 121, the second side plate 122, and the partition plate 123 form a first accommodation cavity 17. The frame 124 is configured to be connected to a side cover 15. The partition plate 123, the frame 124, the side cover 15, and the two first side plates 121 enclose a second accommodation cavity 16.

To improve the sealing performance of the battery box, a second sealant layer 172 is disposed between the side cover 15 and the box body.

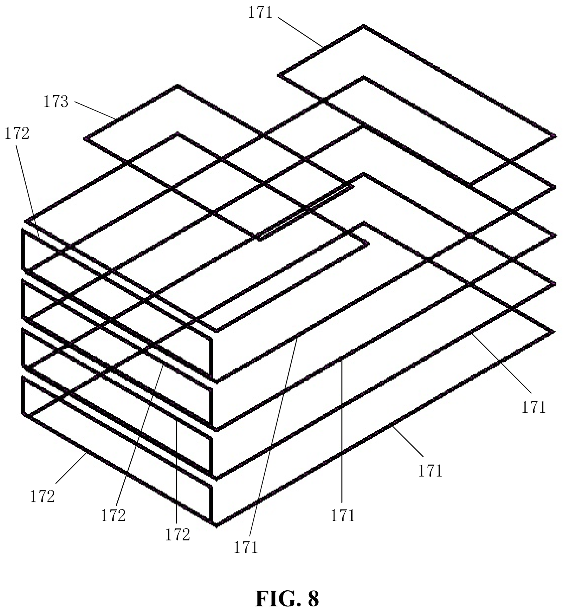

In some embodiments, as shown in FIG. 8, an annular second sealant layer 172 is disposed between the side cover 15 and each splicing box. The second sealant layer 172 extends along the periphery of the frame 124. Each second sealant layer 172 can sealingly connect a respective frame 124 to a side cover 15. Each splicing box 12 is individually sealed with a side cover 15 by a respective second sealant layer 172, ensuring more reliable sealing.

In some embodiments, each frame 124 is provided with a second sealant retaining groove 1241 along its periphery. A sealant is injected into the second sealant retaining groove 1241 to form a second sealant layer 172, thereby achieving sealing between the side cover 15 and the frame 124.

The battery box of this embodiment uses multiple sealant layers including the first sealant layers, second sealant layers, and third sealant layers for sealing. The waterproof grade of the sealant layers can reach IPX8.

## Claims

1. A battery box, comprising: a bottom guard plate (11), a box cover (13), and a box body connected to the bottom guard plate (11) and the box cover (13), wherein the box body comprises at least two splicing boxes (12) that are stacked, and for each splicing box (12), an upper end and a lower end of the splicing box (12) are each provided with an opening.

2. The battery box of claim 1, wherein a first sealant layer (171) is disposed between the box cover (13) and the box body, between two adjacent splicing boxes (12) of the at least two splicing boxes (12), and between the bottom guard plate (11) and the box body.

3. The battery box of claim 2, wherein at least one of a top end face or a bottom end face of a splicing box (12) of the at least two splicing boxes (12) is provided with a first sealant retaining groove (125), and the first sealant retaining groove (125) is configured to accommodate the first sealant layer (171).

4. The battery box of any one of claims 1 to 3, wherein an uppermost splicing box (12) of the at least two splicing boxes (12) comprises:
at least two accommodation bodies (12a), wherein an accommodation body (12a) of the at least two accommodation bodies (12a) is configured to accommodate a cell assembly (20); and
a connecting plate (12b) connected to bottom ends of two adjacent accommodation bodies (12a) of the at least two accommodation bodies (12a), and the two adjacent accommodation bodies (12a) and the connecting plate (12b) cooperate to form an avoidance space.

5. The battery box of any one of claims 1 to 3, wherein the box body further comprises an electrical box (14), the electrical box (14) is disposed between the box cover (13) and an uppermost splicing box (12) of the at least two splicing boxes (12), and the electrical box (14) is in communication with a splicing box (12) adjacent to and below the electrical box (14).

6. The battery box of any one of claims 1 to 3, wherein a first accommodation cavity (17) and a second accommodation cavity (16) are disposed in the battery box, and the first accommodation cavity (17) is configured to accommodate a cell assembly (20).

7. The battery box of claim 6, further comprising a side cover (15), wherein the side cover (15) is vertically arranged and detachably connected to the box body, and the side cover (15) and the box body enclose the second accommodation cavity (16); and
an annular second sealant layer (172) is disposed between the side cover (15) and each splicing box (12).

8. A multilayer battery system, comprising:
the battery box of any one of claims 1 to 7;
a plurality of cell assemblies (20) that are stacked, wherein each splicing box (12) accommodates one of the plurality of cell assemblies (20); and
a conductive assembly disposed in the battery box and configured to be electrically connected to the plurality of cell assemblies (20).

9. The multilayer battery system of claim 8, further comprising a liquid cooling assembly (30), wherein the liquid cooling assembly (30) comprises:
a plurality of first liquid cooling plates (31), wherein a bottom of each cell assembly (20) of the plurality of cell assemblies (20) is provided with a first liquid cooling plate (31) of the plurality of first liquid cooling plates (31); and
a second liquid cooling plate (32) disposed at a top of an uppermost cell assembly (20) of the plurality of cell assemblies (20).

10. The multilayer battery system of claim 9, wherein the first liquid cooling plate (31) is welded to an inner bottom end of a splicing box (12) of the at least two splicing boxes (12).
